# EUROPEAN PATENT SPECIFICATION

(11) **EP 4 230 449 B1**
(45) Date of publication and mention of the grant of the patent: **11.11.2026**
(21) Application number: 22157253.0
(22) Date of filing: 17.02.2022
(51) Int. Cl.: B60H 1/00, B60H 3/06, B01D 46/00

(54) **METHOD FOR OPERATING A CABIN AIR FILTRATION SYSTEM OF A VEHICLE, USE OF A FILTER ELEMENT, ELECTRONIC CONTROL UNIT AND CABIN AIR FILTRATION SYSTEM**
VERFAHREN ZUM BETRIEB EINES KABINENLUFTFILTRATIONSSYSTEMS EINES FAHRZEUGS, VERWENDUNG EINES FILTERELEMENTS, ELEKTRONISCHES STEUERGERÄT UND KABINENLUFTFILTRATIONSSYSTEM
PROCÉDÉ DE FONCTIONNEMENT D'UN SYSTÈME DE FILTRATION D'AIR D'UNE CABINE D'UN VÉHICULE, UTILISATION D'UN ÉLÉMENT DE FILTRE, UNITÉ DE COMMANDE ÉLECTRONIQUE ET SYSTÈME DE FILTRATION D'AIR DE CABINE

(43) Date of publication of application: 23.08.2023
(73) Proprietor: MANN+HUMMEL GmbH, 71636 Ludwigsburg (DE)
(72) Inventor: BAUER, Bernd, 96187 Stadelhofen (DE); BAUCH, Maximilian, 74357 Bönnigheim (DE); PFLÜGER, Frank, 74343 Sachsenheim (DE)
(74) Representative: Mann + Hummel Intellectual Property

(56) References cited:
- WO-A1-2018/224299
- US-A1- 2017 056 806
- US-A1- 2017 356 835
- US-A1- 2018 319 256
- US-B2- 6 991 674

## Description

### Technical field

The present invention refers to a method for operating a cabin air filtration system of a vehicle, wherein the cabin air filtration system comprises an air filter device for filtering an air flow into the cabin, which air flow is composed of fresh air from outside and recirculated air from inside the cabin, wherein a magnitude of the air flow through the air filter device is adjustable and wherein a ratio of fresh air and recirculated air of the air flow through the air filter device is adjustable.

### Background

Such a cabin air filtration system is known from WO 2018/224299 A1. The system according to WO 2018/224299 A1 comprises three filter elements some of which can selectively be bypassed. Furthermore, a ratio of fresh air and recirculated air is adjustable.

Generally, the use of several filter elements allows for a significant increase of air quality inside the cabin, in particular in highly polluted environments. Using higher amounts of recirculated air may contribute to enhance the air quality inside the cabin. Furthermore, by selectively bypassing some of the filter elements, in particular in less polluted environments, the service life of the filter elements can be increased. Bypassing some of the filter elements further allows for a reduction of energy consumption of the cabin air filtration system.

From EP 1 985 351 A1 an air filter device is known which has a filter unit with a filter housing and a filter insert having a filter frame and a filter element. The filter element is equipped with a transponder and a reader for reading out the transponder is arranged in the filter unit or outside the filter unit. The data can relate to a type of the filter unit, performance data or technical data of the filter unit.

Similar systems with an RFID reader and an air filter bearing an RFID tag are known from WO 2018/031403 A1 or DE 20 2015 001 147 U1. Information retrieved from the RFID tag may be used for determining a remaining service life of the air filter
US 2004/0065204 A1 describes an air quality monitoring arrangement of an enclosed cab of an agricultural tractor used for towing or carrying spraying implements for treating crop with substances which might be toxic or otherwise harmful to people. A signal from a contaminant sensor is sent to a control arrangement, which compares the actual sensed contamination of the air within the cab over time with a value from a performance map representing the performance expected from normal performance of the air circulating system of the cab. When the sensed contamination is higher than that of the performance map the operator is warned of a malfunction. The blower of the air circulating system may have its speed increased so as to pressurize the cab so as to exclude the entry of contaminated air through seals and other small openings of the cab. The air filters used are coded and recognized by the control system, which keeps track of the service time of the filters and warns an operator when the service time exceeds that of a stored time value related to the particular filter.

US 2017/356835 A1 describes a method and system for determining vehicle interior cabin filtration performance by calculating passenger cabin particulate contaminant concentration based on a vehicle-exterior atmospheric particulate contaminant concentration, a passenger cabin air filter efficiency, and an HVAC airflow rate obtained from various sensor inputs and lookup tables stored in the vehicle controller storage. US 6991674 B2 describes an arrangement for the monitoring of the degree of contamination in a closed compartment which involves measuring and comparing actual degree of contamination with the values in a performance map and issuing a warning signal upon finding a deviation from the performance map. US 2018/319256 A1 describes a ventilation system for a mobile structure equipped with a variably adjustable filter device, a device for collecting air quality data on the interior and exterior of the structure and a control unit that adjusts the filter's characteristics based on the air quality data. US 2017/056806 A1 describes an air filtration system for a passenger compartment of a vehicle which involves using a HEPA filter for filtering air to reduce amounts of particles and gasses before delivering the filtered air into the passenger compartment.

It is an object of the invention to improve air quality focused operation of a cabin air filtration system.

This is achieved by a method for operating a cabin air filtration system of a vehicle according to claim 1, an electronic control unit for a cabin air filtration system of a vehicle according to claim 16 and a cabin air filtration system according to claim 19 and a use of a filter element according to claim 21. Advantageous embodiments are given in the subclaims.

### Disclosure of the invention

In accordance with the invention, a method for operating a cabin air filtration system of a vehicle is provided. The vehicle is preferably a passenger car, a van or a bus.

The cabin air filtration system comprises an air filter device for filtering an air flow into the cabin. The air flow through the air filter device is composed of fresh air from outside and recirculated air from inside the cabin. In other words, fresh air from outside as well as recirculated air from inside the cabin are filtered in the air filter device and blown (back) into the cabin. The air filter device comprises at least one air filter element.

A magnitude of the air flow through the air filter device is adjustable. A blower device may be employed to this end. The magnitude of the air flow describes the amount of fresh and recirculated air which is filtered in the air filter device and may be measured as volume or mass per time.

A ratio of fresh air and recirculated air of the air flow through the air filter device is adjustable. As outlined above, the air flow through the air filter device is composed of fresh and recirculated air. The portion of these two components can be adjusted to be only fresh air, only recirculated air or some ratio in between. The adjustment of the recirculation ratio of fresh and recirculated air can preferably be made continuously. A flow ratio adjustment device may be employed to this end.

The air filter device comprises at least one filter element. The air flow through the air filter device is directed through the filter element or at least one of the filter elements in order to remove contaminants such as particles. The filter element has a storage means. The storage means may be affixed to a filter medium, an end plate or a frame of the filter element. The storage means contains data comprising information characterizing the filter element.

The storage means is an RFID-tag, an NFC-tag, or a graphical code such as a barcode or QR-code. A filter housing of the cabin air filtration system may comprise a reader for the storage means.

In a step A) of the method, data comprising information characterizing the filter element is retrieved from the filter element. The information may specify a type of the filter element. To this end, the information may comprise an identifier corresponding to a certain type or several similar types of filter elements. The information may comprise a serial number.

In a step B) of the method, system information is provided for the filter element, which is identified by the information retrieved in step A). The system information links
- at least one characteristic of the filter element comprising information on a filtration efficiency of the filter element,
- the magnitude of the air flow through the air filter device,
- the recirculation ratio of fresh and recirculated air,
- air property data referring to an air property inside and/or outside the cabin, and
- an air quality information which characterizes the air quality inside the cabin

The system information may be obtained from experiments and/or simulations. The system information may be provided for different pollutants, i.e. the respective relation of the aforementioned values may be contained in the system information for different pollutants, such as particles of different size ranges and/or harmful gases. The system information describes functional interdependencies of the cabin air filtration system, which are particularly relevant. In particular, the filtration efficiency may describe the amount of a specific pollutant, which is held back in the filter element, i.e. removed from the air flow through the air filter device, at a certain operation state of the cabin air filtration system. The air quality information provided with the system information depends on the magnitude of the air flow through the air filter device, the recirculation ratio of fresh and recirculated air, and the air property data as variables. The information about the air quality may be a concentration of one or more pollutants in the air inside the cabin. The information about the air quality may be an aggregated air quality index. The air quality index is typically calculated using a formula combining amounts of different pollutants, such as for instance PM1, PM2.5, PM10, NO2, O3 and the number of fine and ultrafine particles. The air quality index could be based for instance on the US-EPA2016 standard.

In step B), the system information may be retrieved from the storage means. In other words, the storage means of the filter element provides the system information. This ensures that the right system information for the filter element is used. In this case, the information characterizing the filter element may be the system information, i.e. the filter element is characterized by the system information provided on its storage means.

Alternatively, in step B) the system information may be retrieved from an internal storage of an electronic control unit of the cabin air filtration system or from an external data base. This allows the use of a storage means with limited storage capacity. In the internal storage of the electronic control unit the system information may be provided independently from an internet connection or the like. Retrieving the system information from an external data base, such as a cloud storage, may facilitate updating the system information.

In a step C) of the method, current air property data referring to an air property inside and/or outside the cabin is retrieved. The current air property data serves as an input value for evaluating the system information in step D).

The air property data may be retrieved from at least one air property sensor of the cabin air filtration system. In particular, the cabin air filtration system may comprise an internal air property sensor and/or an external air property sensor. This allows obtaining particularly precise air property data.

Alternatively or additionally, the (outside) air property data may be retrieved from an environmental pollution measurement service. This variant reduces hardware cost for a vehicle with the cabin air filtration system.

In a step D) of the method, the air quality information which characterizes the air quality inside the cabin is determined from the system information for the current magnitude of the air flow, the current recirculation ratio of fresh and recirculated air and the current air property data. The information about the air quality inside the cabin may be used for controlling the operation of the cabin air filtration system. The determined air quality information which characterizes the air quality inside the cabin may in particular be a current air quality information which characterizes the current or momentary air quality inside the cabin.

Linked data as used herein may refer to data that is functionally related, for example, at least one characteristic of the air filter device (e.g., a data point of air quality information) may be related to specific magnitude of the air flow, ratio of fresh and recirculated air and an air property data. A plurality of such data points may be linked, e.g., in a database, a matrix, a multidimensional array, a map, a graph, or a combination thereof.

The act of providing, retrieving and/or determining may each be carried out by a computation system, e.g., an electronic control circuit comprising a processor, a server, and/or a cloud.

Additionally or alternatively, the information about the air quality inside the cabin, in particular the result of a comparison of the information about the air quality inside the cabin with a predefined target value, may be notified to a user of the vehicle. This allows the user to perceive the current efficacy of the cabin air filtration system. The target value may be set by the user according to his personal preference.

The information about the air quality inside the cabin may be compared with a target value, preferably different target values for different pollutants, in particular particulates of different size ranges and/or harmful gases. The target value may depend on a geo-localization of the vehicle and/or on a user input. The result of the comparison may be used for controlling the operation of the cabin air filtration system in order to comply with the target value(s), preferably while minimizing energy consumption of the cabin air filtration system.

In particular, the recirculation ratio of fresh and recirculated air may be adjusted based on the result of the comparison. Specifically, in predefined time intervals, the comparison may be performed and the recirculation ratio of fresh and recirculated air may be adjusted accordingly. This ensures that the operation of the cabin air filtration system is always close to the optimum. The time interval is chosen such that the relevant input parameters typically do not change excessively between two successive evaluations. The time interval is preferably at least 0,5 s and/or at most 10 s. In particular, the time interval may be 1 s.

The operation of the cabin air filtration system at the recirculation ratio according to the result of the comparison may be interrupted by periods of operation of the cabin air filtration system at an air recirculation ratio provided from a prioritized strategy, in particular for defogging, defrosting, speed venting or energy saving.

Preferably, the air filter device comprises
- at least one basic filter element for filtering the fresh air and/or the recirculated air, and
- at least one HEPA filter element and/or an ambient air filter element for filtering the fresh air.

The HEPA filter element allows achieving a particularly good air quality inside the cabin. The ambient filter element can protect the HEPA filter element from large particles and extend its service life. Fresh air from outside may selectively be directed to pass through or bypass the HEPA filter element and/or the ambient air filter element. Typically, the ambient air filter element is located upstream the HEPA filter element. The basic filter element and/or the ambient air filter element may comprise at least one adsorbent, in particular activated carbon. The adsorbent may remove harmful gases or odors from the filtered air. Activated carbon is particular efficient in this regard.

It may be provided, that the fresh air flow from outside passes or bypasses the HEPA filter element and/or the ambient air filter element depending on the result of the comparison of the information about the air quality inside the cabin with the at least one target value. In this way, the HEPA filter element and/or ambient filter element are only used if necessary in order to meet the air quality target. Bypassing these filter elements whenever possible, extends their service life and reduces energy consumption.

Preferably, the at least one characteristic of the air filter device further comprises information on
- an efficiency curve of a filter medium of the filter element,
- a type of the filter medium,
- a pressure loss of the filter element depending on the magnitude of the air flow through the air filter device, and/or
- a pollutant accumulation capacity, in particular a dust capacity, of the filter element.

The efficiency curve may be given for different pollutants, e.g. particles of different sizes and/or different concentrations of harmful gases. If the air filter device comprises a plurality of filter elements, an efficiency curve may be given for the filter medium of each of the respective filter elements. The type of the filter medium may specify if the air filter medium contains nano fibers and/or an adsorbent such as activated carbon; it may also specify a HEPA class of the filter medium. The pressure loss may be given dependent on an (expected) dust load of the filter medium. This additional information can be used for a particularly precise control of the cabin air filtration system.

The system information may comprise a multidimensional data array with the air quality information as an output value. The other parameters (e.g. magnitude of the air flow through the air filter device, recirculation ratio, air property data) of the data array serve as input parameters, i.e. the data array is evaluated for the current values of these parameters. In this way, the system information may readily be established and evaluated. Typically, the data array is stored in an electronic control unit of the cabin air filtration system. The data array may be represented in form of maps or characteristic diagrams.

Preferably, an interpolation scheme is used for determining the air quality information from the multidimensional data array. This allows for an efficient and precise evaluation of the system information, if an input value (e.g. magnitude of the air flow, recirculation ratio, air property data) deviates from the values with which the data array was created.

In an advantageous variant of the method, a remaining service life of the filter element is determined. This allows for a timely exchange of the filter element while exploiting its filtration capacity to a high degree. The pollutant accumulation capacity and a previous operation time of the filter element may be considered to this end. Preferably a measurement of an air property sensor, in particular an external air property sensor, of the cabin air filtration system is considered for determining the remaining service life. The remaining service life may be notified to a user of the vehicle.

A preferred variant of the method is characterized in that the system information provided in step B) also links the vehicle speed to the air quality information and that the current vehicle speed is considered in step D) for determining the information about the air quality inside the cabin. This allows considering the effect of unfiltered infiltration of air from outside into the cabin, e.g. through seals of openings (such as doors or windows), wires or hoses.

The system information may consider an age of the vehicle and/or an age of a filter element of the air filter device. Upon aging, the leakage from outside which bypasses the air filter device may increase and/or a filtration efficiency of the air filter device may decrease. These effects can be established beforehand and implemented in the system information in order to ensure the best possible operation conditions of the cabin air filtration system, even after the vehicle or air filter device has undergone degradation.

According to the invention, step A) is repeated each time the vehicle is started and step B) is repeated at least when the information retrieved in repeated step A) differs from the information retrieved in the previous execution of step A). This variant of the method ensures that system information is always up to date. In particular, replacement of the previously installed filter element by a different type of filter element will be recognized and accounted for by retrieving the corresponding system information.

The method comprises determining that the information retrieved in step A) differs from the information retrieved in the previous execution step A) and repeating step B).

An advantageous variant of the method is characterized in that after step A), it is checked if the filter element is suitable for the cabin air filtration system, and that
- if the filter element is suitable, steps B) to D) are performed,
- if the filter element is not suitable, the cabin air filtration system is operated in emergency mode and/or the unsuitability of the filter element is notified to a user of the vehicle.

The notification may urge the user to replace the unsuitable filter element with a suitable filter element. The notification may be made in a display of the vehicle and/or via a smartphone app of the user. A link for online purchase of a suitable filter element may be provided with the notification.

In the emergency mode, the determination of an information about the air quality inside the cabin and a remaining service life is generally not possible. Thus, this information cannot be notified to the user.

If the air filter device comprises a basic filter element and further filter elements, such as an HEPA filter element and/or an ambient air filter element, the air flow may be directed to pass through all these filter elements in the emergency mode. This ensures best air quality inside the cabin. Alternatively, the emergency mode may provide that the air flow is only directed to pass through the basic filter element and to bypass all of the further filter elements. This reduces energy consumption and saves the service life of the further filter elements, such as the expensive HEPA filter element.

The invention further relates to a use of a filter element in a cabin air filtration system of a vehicle according to the invention, wherein the cabin air filtration system comprises an air filter device for filtering an air flow into the cabin, which air flow is composed of fresh air from outside and recirculated air from inside the cabin, wherein a magnitude of the air flow through the air filter device is adjustable, and wherein a ratio of fresh air and recirculated air of the air flow through the air filter device is adjustable. According to the invention, the filter element has the storage means, which comprises system information for the filter element, which system information links
- at least one characteristic of the filter element comprising information on a filtration efficiency of the filter element,
- the magnitude of the air flow through the air filter device,
- the recirculation ratio of fresh and recirculated air,
- air property data referring to an air property inside and/or outside the cabin, and
- an air quality information which characterizes the air quality inside the cabin.

In other words, the system information to be used in the above-described inventive method is provided with the filter element. The filter element with the system information contained in its storage means facilitates execution of this method. In particular, the filter element allows the system information to be retrieved from the storage means in step B) of the method. This ensures that the right system information for the filter element is used.

Preferably, the at least one characteristic of the filter element further comprises information on
- an efficiency curve of a filter medium of the filter element,
- a type of the filter medium,
- a pressure loss of the filter element depending on the magnitude of the air flow through the air filter device, and/or
- a pollutant accumulation capacity, in particular a dust capacity, of the filter element.

The efficiency curve may be given for different pollutants, e.g. particles of different sizes and/or different concentrations of harmful gases. If the air filter device comprises a plurality of filter elements, an efficiency curve may be given for the filter medium of each of the respective filter elements. The type of the filter medium may specify if the air filter medium contains nano fibers and/or an adsorbent such as activated carbon; it may also specify a HEPA class of the filter medium. The pressure loss may be given dependent on an (expected) dust load of the filter medium. This additional information can be used for a particularly precise control of the cabin air filtration system.

It is provided, that the storage means is an RFID-tag, an NFC-tag, or a graphical code, in particular a barcode or a QR-code. Such a storage means is inexpensive and easy to read out.

Furthermore, the invention relates to an electronic control unit for a cabin air filtration system of a vehicle according to the invention, wherein the cabin air filtration system comprises an air filter device for filtering an air flow into the cabin, which air flow is composed of fresh air from outside and recirculated air from inside the cabin, wherein a magnitude of the air flow through the air filter device is adjustable, wherein a ratio of fresh air and recirculated air of the air flow through the air filter device is adjustable, and wherein the air filter device comprises at least one filter element having a storage means.

The electronic control unit is configured to execute the method according to the invention.

In a first embodiment, the electronic control unit is configured to retrieve the system information. For instance, the electronic control unit may be configured to retrieve the system information from the storage means of the filter element, in particular wherein the filter element is an above-described filter element according to the invention. Alternatively, the electronic control unit may be configured to retrieve the system information from an external data base, such as a cloud storage.

In a second embodiment, the electronic control unit comprises the system information. In particular, the system information may be stored in an internal storage of the electronic control unit. Preferably, different sets of system information are provided in the internal storage for different suitable filter elements.

The invention also relates to a cabin air filtration system comprising
- an air filter device for filtering an air flow into a cabin of a vehicle, which air flow is composed of fresh air from outside and recirculated air from inside the cabin;
- a blower device for adjusting a magnitude of the air flow through the air filter device;
- a flow ratio adjustment device for adjusting a ratio of fresh air and recirculated air of the air flow through the air filter device;
- a filter element having the storage means, which comprises information characterizing the filter element;
- a reader for the storage means; and
- an above-described electronic control unit according to the invention.

The cabin air filtration is used to perform the method according to the invention.

The storage means is an RFID-tag, an NFC-tag, or a graphical code such as a barcode or QR-code. The reader may be an RFID-reader, a NFC-reader or a graphical code reader, in particular a barcode reader or a QR-code reader.

Generally, the filter element is installed in a filter housing of the air filter device. The reader is preferably attached to the filter housing.

Preferably, the filter element is an above-described filter element according to the invention. I.e., the system information may be comprised in the storage means.

### Brief description of drawings

Other advantages and features of the invention will be appreciated from the following description of embodiments of the invention with reference to the figures of the drawing, which show significant details, and from the claims.
- Fig. 1: shows a vehicle having a cabin air filtration system with a basic filter element, a HEPA filter element and an ambient air filter element each having a storage means carrying information on the respective filter element, and wherein system information relating to the installed filter elements is used to determine an information about the air quality inside the cabin according to the invention, in a schematic sketch;
- Fig. 2: shows the vehicle from Fig. 1, wherein the fresh air passes through the ambient air filter element and the basic filter element and bypasses the HEPA filter element, in a schematic sketch;
- Fig. 3: shows a schematic flow chart of a method for operating a cabin air filtration system according to the invention, wherein system information is retrieved from a storage means of a filter element;
- Fig. 4: shows a schematic flow chart of a method for operating a cabin air filtration system according to the invention, wherein system information is retrieved from an external data base.

### Detailed description

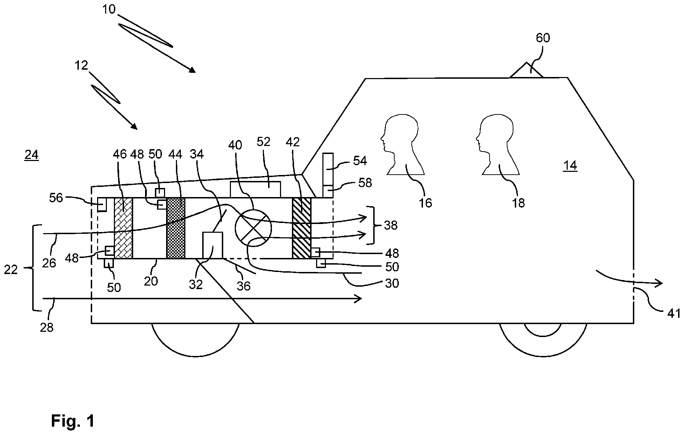

**Fig. 1** shows a vehicle **10.** The vehicle comprises a cabin air filtration system **12.** Inside the vehicle 10, a cabin **14** is formed. Users **16, 18** of the vehicle 10 are seated in the cabin 14.

The cabin air filtration system 12 has an air filter device **20.** A total influx **22** of fresh air from an outside environment **24** enters the cabin as a filtered influx **26,** which passes through the air filter device 20, and as an unfiltered infiltration influx **28,** which bypasses the air filter device 20. The magnitude of the unfiltered infiltration influx depends in particular on the vehicle speed.

Air from inside the cabin 14 is recirculated in a recirculation air flow **30** through the air filter device 20. A flow ratio adjustment device **32** is provided to adjust the ratio of the recirculation air flow 30 and filtered influx 26. The flow ratio adjustment device 32 is depicted here schematically with two movable flaps **34, 36.**

The filtered influx 26 and the recirculation air flow 30 together present a filtered air flow **38** through the air filter device 20. A blower device **40** is provided to adjust a magnitude of the air flow 38, which passes through the air filter device 20. The magnitude may be given as volume or mass of air per time. The magnitude of the air flow 38 may be measured by a flow meter (not depicted).

Alternatively, the magnitude of the air flow may be estimated. To this end, a voltage and current applied to the blower device 40 may be measured. Furthermore, the temperature of the air in the outside environment 24 may be measured. The density of the air outside may be measured or calculated from the temperature. Likewise, the temperature and density of the air inside the cabin 14 may be measured and/or calculated. Using this dataset the volumetric and/or mass flow rate through the blower device 40 can be determined.

Air from inside the cabin 14 may exit the cabin at one or more decompression outlets **41.** An excessive increase of the pressure inside the cabin 14, especially at higher speeds, is thereby prevented. Further, decompressing the cabin 14 reduces the energy consumption of the blower device 40 to blow a sufficient amount of fresh air into the cabin 14.

In the depicted embodiment, the air filter device 20 comprises a basic filter element **42,** a HEPA filter element **44** and an ambient air filter element **46.** The basic filter element 42 and the ambient air filter element 46 may be equipped with an adsorbent such as activated carbon. Here, the recirculation air flow 30 passes solely through the basic filter element 42. The filtered influx 26 may successively pass through the ambient air filter element 46, the HEPA filter element **44** and the basic filter element 42.

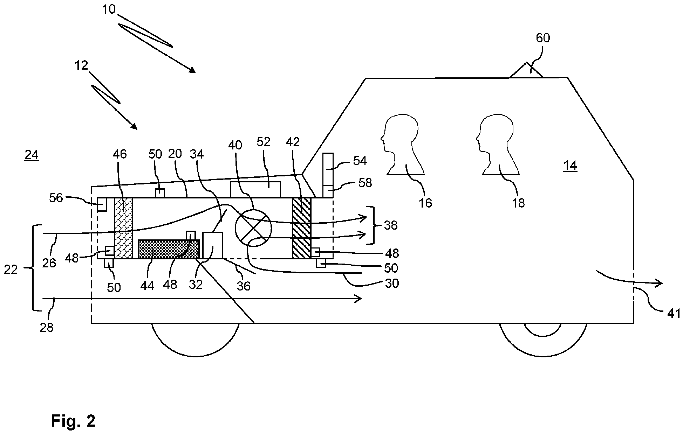

A bypass function for the filtered influx 26 from outside may be provided with regard to the ambient air filter element 46 or preferably the HEPA filter element 44. As schematically depicted in **Fig. 2****,** the filtered influx might for instance pass through the ambient air filter element 46 and the basic filter element 42, while bypassing the HEPA filter element 44.

At least one of the filter elements, generally the basic filter element 42, preferably also the HEPA filter element 44 and the ambient air filter element 46, are (each) equipped with a storage means **48.** The storage means 48 could be an RFID-chip, which might be attached to a frame of the respective filter element 42, 44, 46.

The air filter device 20 has at least one reader **50** for reading information stored in the storage means 48 of the filter elements 42, 44, 46. Here, a separate reader 50 for each of the filter elements 42, 44, 46 is mounted on a housing of the air filter device 20. In the depicted embodiment, the readers 50 are each RFID-readers.

The cabin air filtration system 12 comprises an electronic control unit **52.** The electronic control unit 52 is configured to operate the cabin air filtration system 12 according to the invention. The electronic control unit 52 evaluates the information read by the readers 50 from the storage means 48. The electronic control unit 52 further serves to control the magnitude of the air flow 38 through the air filter device 20 and the recirculation ratio, i.e. the magnitude of the recirculation air flow 30 divided by the magnitude of the filtered influx 26.

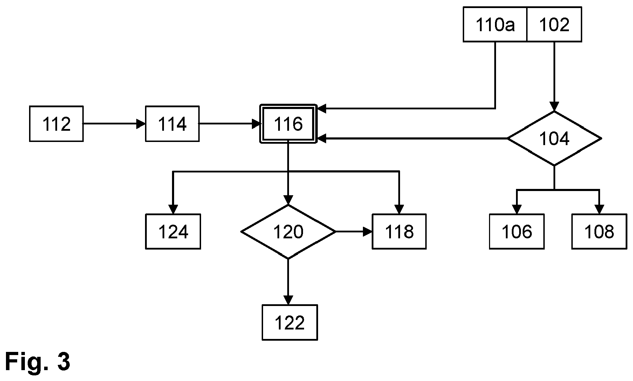

A flow chart of a method for operating the cabin air filtration system 12 according to the invention is depicted in **Fig. 3****.**

In a step **102,** data comprising information, which characterizes the filter element or the filter elements 42, 44, 46 respectively, is retrieved. To this end, the content of the storage means 48 is read by the readers 50. Step 102 is preferably performed each time the vehicle 10 is started.

In a step **104,** it is checked if the installed filter elements 42, 44, 46 are suitable for the cabin air filtration system 12. This may be judged based on a serial number or part number which is read from the storage means 48.

If the filter element or at least one of the filter elements 42, 44, 46 is not suitable, the electronic control unit 52 may notify the driver 16 in a step **106,** e.g. via an input-output device **54** such as a touchscreen. Furthermore, the electronic control unit 52 may switch to an emergency mode in a step **108.** In a first variant of the emergency mode, the HEPA filter element 44 might always be active in order to maintain best air quality inside the cabin 14. In an alternative variant of the emergency mode, the HEPA filter element 44 might always be bypassed, in order to reduce energy consumption and extend the service life of the HEPA filter element 44.

If the filter elements 42, 44, 46 are suitable, system information for the cabin air filtration system 12 with the installed filter elements 42, 44, 46 is considered. As depicted in Fig. 3, the system information may be retrieved in a step **110a** from the storage means 48 via the readers 50.

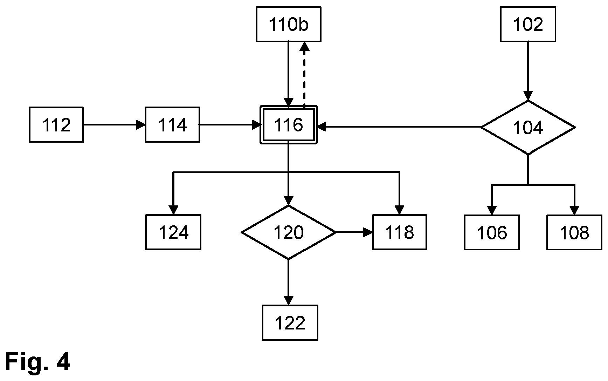

According to the embodiment depicted in **Fig. 4****,** the system information may be retrieved in a step **110b** from an external data base, such as a cloud storage. The information which was retrieved in step 102 is used to identify the installed filter element(s) 42, 44, 46 and to retrieve the corresponding system information. Alternatively, it might be provided, that the system information is retrieved from an internal storage of the electronic control unit 52 using the information which was retrieved in step 102.

Besides the procedures for retrieving the system information, the operation methods sketched in Figs. 3 and 4 do not differ.

The system information links
- at least one characteristic of the filter element(s) 42, 44, 46 comprising information on a filtration efficiency of the filter element(s) 42, 44, 46,
- the magnitude of the air flow 38 through the air filter device 20,
- the recirculation ratio of fresh and recirculated air,
- air property data referring to an air property inside and/or outside the cabin 14, and
- an air quality information which characterizes the air quality inside the cabin 14.

The at least one characteristic of the filter element 42, 44, 46 may further comprise information on
- an efficiency curve of a filter medium of the filter element(s) 42, 44, 46,
- a type of the filter medium of the respective filter element(s) 42, 44, 46,
- a pressure loss of the filter element(s) 42, 44, 46 depending on the magnitude of the air flow 38 through the air filter device 20, and
- a pollutant accumulation capacity, in particular a dust capacity, preferably for each of the basic, HEPA and ambient air filter elements 42, 44, 46.

Note, that the effect of an open window or sunroof might be considered in the system information.

In a step **112,** current air property data referring to an air property inside and/or outside the cabin 14 are retrieved. The air property data can be obtained from an external air property sensor **56** or a cabin air property sensor **58** of the cabin air filtration system 12. External air property data might also be retrieved from a public pollution measurement service based on the geo-localization of the vehicle 10. A GPS-antenna **60** may serve to establish the geo-localization of the vehicle 10.

In a step **114,** the electronic control unit 52 is provided with data referring to a current operational state of the vehicle 10 and in particular of the cabin air filtration system 12. This data comprises the information on the inside and/or outside air quality retrieved in step 112, the magnitude of the air flow 38 through the air filter device 20, the recirculation ratio of the fresh (filtered influx 26) and recirculated air (recirculation air flow 30), and preferably the vehicle speed.

Based on the data provided in step 114 and the system information retrieved in step 110a or 110b, respectively, the electronic control unit 52 determines in a step **116** an information about the air quality inside the cabin 14. In other words, the performance of the cabin air filtration system 12, which is described in the system information, is evaluated for the current operational state in order to provide an estimate of the air quality, which will be achieved inside the cabin 14, if the operation of the cabin air filtration system 12 will be continued at the currently set parameters.

The information about the air quality inside the cabin 14 may be given as an aggregated air quality index. In a step **118,** the information about the air quality inside the cabin 14 may be notified to the users 16, 18 of the vehicle 10, e.g. via the input-output device 54.

A target value for the air quality may be predefined or set by a user 16, 18 of the vehicle 10, e.g. via the input-output device 54. Different target values may be predefined for different geographical regions, e.g. in order to comply with local laws or to meet local user requirements.

In a step **120,** the information about the air quality inside the cabin 14, which was determined in step 116, may be compared to the target value. The result of the comparison may also be notified to the users 16, 18, cf. step 118.

Based on the result of the comparison, at least one operational parameter of the cabin air filtration system 12 may be adjusted in a step **122.** For instance, the ratio of fresh and recirculated air may be altered, especially if the target value is not met. If the target value is met, it might be decided to bypass the HEPA filter element 44. If the target value is not met, the HEPA filter element 44 can be utilized.

Preferably, the electronic control unit 52 monitors the duration of use of the installed filter element(s) 42, 44, 46. Based on the operational conditions (in particular the (outside) air quality, the magnitude of the filtered air flow 38, and the recirculation ratio) and the system information (in particular the pollutant accumulation capacity of the filter element(s) 42, 44, 46) the electronic control unit 52 may determine a remaining service life of the filter element(s) 42, 44, 46 in a step **124.** This may be notified to a user 16, 18 of the vehicle 10.

In summary, the invention refers to a method for operating a cabin air filtration system (12) with an air filter device (20) for filtering an air flow (38) into the cabin (14). The air filter device comprises at least one filter element (42, 44, 46) having a storage means (48), the storage means (48) being an RFID-tag, an NFC-tag, or a graphical code.

The method comprises the steps
A) retrieving from the storage means of the filter element data comprising information characterizing the filter element;
B) providing system information for the filter element identified by the information retrieved in step A), which system information links
   - at least one characteristic of the filter element comprising information on a filtration efficiency of the filter element,
   - a magnitude of the air flow through the air filter device,
   - a recirculation ratio of fresh and recirculated air of the air flow through the air filter device,
   - air property data referring to an air property inside and/or outside the cabin, and
   - an air quality information which characterizes the air quality inside the cabin;
C) retrieving current air property data referring to an air property inside and/or outside the cabin;
D) determining from the system information for the current magnitude of the air flow, the current recirculation ratio of fresh and recirculated air and the current air property data an information about the air quality inside the cabin,
wherein step A) is repeated each time the vehicle is started and that step B) is repeated at least when the information retrieved in repeated step A) differs from the information retrieved in the previous execution of step A).

### List of Reference Numbers

Vehicle **10**
Cabin air filtration system **12**
Cabin **14**
Users **16, 18**
Air filter device **20**
Total influx **22** of fresh air from
Outside environment **24**
Filtered influx **26**
Unfiltered infiltration influx **28**
Recirculation air flow **30**
Flow ratio adjustment device **32**
Flaps **34, 36**
Filtered air flow **38**
Blower device **40**
Decompression outlet **41**
Basic filter element **42**
HEPA filter element **44**
Ambient air filter element **46**
Storage means **48**
Reader **50**
Electronic control unit **52**
Input-output device **54**
External air property sensor **56**
Cabin air property sensor **58**
GPS-antenna **60**
Retrieve **102** information characterizing the filter element
Check **104** if the filter element is suitable
Notify **106** unsuitable filter element
Activate **108** emergency mode
Retrieve **110a** system information from the storage means
Retrieve **110b** system information from an external data base
Retrieve **112** current air property data
Provide **114** current operational data
Determine **116** information about the air quality inside the cabin
Notify **118** air quality information to user
Compare **120** air quality information with a target value
Adjust **122** operational parameter
Determine **124** remaining service life of a filter element

## Claims

1. Method for operating a cabin air filtration system (12) of a vehicle (10),
wherein the cabin air filtration system (12) comprises an air filter device (20) for filtering an air flow (38) into the cabin (14), wherein the air flow (38) is composed of fresh air from outside and recirculated air from inside the cabin (14);
wherein a magnitude of the air flow (38) through the air filter device (20) is adjustable;
wherein a ratio of fresh air and recirculated air of the air flow (38) through the air filter device (20) is adjustable;
**characterised in that** the air filter device (20) comprises at least one filter element (42, 44, 46) having a storage means (48), the storage means (48) is an RFID-tag, an NFC-tag, or a graphical code;
the method comprising the steps
A) retrieving (102) from the storage means (48) of the filter element (42, 44, 48) data comprising information characterizing the filter element (42, 44, 48);
B) providing system information for the filter element (42, 44, 48) identified by the information retrieved in step A), wherein the system information links
- at least one characteristic of the filter element (42, 44, 48) comprising information on a filtration efficiency of the filter element (42, 44, 48),
- the magnitude of the air flow (38) through the air filter device (20),
- the recirculation ratio of fresh and recirculated air,
- air property data referring to an air property inside and/or outside the cabin (14),
and
- an air quality information which characterizes the air quality inside the cabin (14);
C) retrieving (112) current air property data referring to an air property inside and/or outside the cabin (14);
D) determining (116) from the system information for the current magnitude of the air flow, the current recirculation ratio of fresh and recirculated air and the current air property data, the air quality information which characterizes the air quality inside the cabin (14)
wherein step A) is repeated each time the vehicle (10) is started and that step B) is repeated at least when the information retrieved in repeated step A) differs from the information retrieved in the previous execution of step A).

2. Method according to claim 1, **characterized in that** in step B) the system information is retrieved (110a) from the storage means.

3. Method according to claim 1, **characterized in that** in step B) the system information is retrieved (110b) from an internal storage of an electronic control unit of the cabin air filtration system (12) or from an external data base.

4. Method according to any one of the preceding claims, **characterized in that** the information about the air quality inside the cabin (14), in particular the result of a comparison of the information about the air quality inside the cabin (14) with a predefined target value, is output to a user interface for notifying to a user (16, 18) of the vehicle (10).

5. Method according to any one of the preceding claims, **characterized in that** the information about the air quality inside the cabin (14) is compared (120) with a target value, preferably different target values for different pollutants, in particular particulates of different size ranges and/or harmful gases.

6. Method according to claim 5, further comprising adjusting the recirculation ratio of fresh and recirculated air based on the result of the comparison.

7. Method according to any one of the preceding claims, **characterized in that** the air filter device (20) comprises
- at least one basic filter element (42) for filtering the fresh air and/or the recirculated air, and
- at least one HEPA filter element (44) and/or an ambient air filter element (46) for filtering the fresh air.

8. Method according to claim 5 or 6, **characterized in that** the air filter device (20) comprises
- at least one basic filter element (42) for filtering the fresh air and/or the recirculated air, and
- at least one HEPA filter element (44) and/or an ambient air filter element (46) for filtering the fresh air,
- and further **characterized in that** the fresh air flow from outside passes or bypasses the HEPA filter element (44) and/or the ambient air filter element (46) depending on the result of the comparison.

9. Method according to any one of the preceding claims, **characterized in that** in step C) the air property data is retrieved from at least one air property sensor (56, 58) of the cabin air filtration system (12).

10. Method according to any one of the preceding claims, **characterized in that** in step C) the air property data is retrieved from an environmental pollution measurement service.

11. Method according to any one of the preceding claims, **characterized in that** the at least one characteristic of the filter element (42, 44, 46) further comprises information on
- an efficiency curve of a filter medium of the filter element (42, 44, 46),
- a type of the filter medium,
- a pressure loss of the filter element (42, 44, 46) depending on the magnitude of the air flow (38) through the air filter device (20), and/or
- a pollutant accumulation capacity, in particular a dust capacity, of the filter element (42, 44, 46).

12. Method according to any one of the preceding claims, **characterized in that** the system information comprises a multidimensional data array with the air quality information as an output value.

13. Method according to any one of the preceding claims, further comprising determining a remaining service life of the filter element (42, 44, 46).

14. Method according to any one of the preceding claims, **characterized in that** the system information provided in step B) also links the vehicle speed to the air quality information and that the current vehicle speed is considered in step D) for determining the information about the air quality inside the cabin (14).

15. Method according to any one of the preceding claims, **characterized in that** after step A), it is checked that the filter element (42, 44, 46) is suitable for the cabin air filtration system (12), and in particular
- if the filter element (42, 44, 46) is suitable, steps B) to D) are performed and/or
- if the filter element (42, 44, 46) is not suitable, the cabin air filtration system (12) is operated in emergency mode and/or the unsuitability of the filter element (42, 44, 46) is notified to a user (16, 18) of the vehicle (10).

16. Electronic control unit (52) for a cabin air filtration system (12) of a vehicle (10),
wherein the cabin air filtration system (12) comprises an air filter device (20) for filtering an air flow (38) into the cabin (14), wherein the air flow (38) is composed of fresh air from outside and recirculated air from inside the cabin (14);
wherein a current magnitude of the air flow (38) through the air filter device (20) is adjustable;
wherein a current recirculation ratio of fresh and recirculated air of the air flow (38) through the air filter device (20) is adjustable; and
wherein the air filter device (20) comprises at least one filter element (42, 44, 46), the at least one filter element (42, 44, 46) having the storage means (48), the storage means (48) is an RFID-tag, an NFC-tag, or a graphical code;
wherein the electronic control unit (52) is configured to execute the method of any one of claims 1 to 15.

17. Electronic control unit (52) according to claim 16, wherein the electronic control unit (52) is further configured to retrieve the system information from the storage means (48) or from an external data base.

18. Electronic control unit (52) according to claim 17, wherein the electronic control unit (52) comprises the system information.

19. Cabin air filtration system (12) comprising
- an air filter device (20) for filtering an air flow into a cabin (14) of a vehicle (10), wherein the air flow is composed of fresh air from outside and recirculated air from inside the cabin (14), wherein the air filter device (20) comprises a filter element (42, 44, 46) having the storage means (48), the storage means (48) is an RFID-tag, an NFC-tag, or a graphical code, and the storage means (48) comprises information characterizing the filter element (42, 44, 46);
- a blower device (40) for adjusting a magnitude of the air flow (38) through the air filter device (20);
- a flow ratio adjustment device (32) for adjusting a ratio of fresh air and recirculated air of the air flow (38) through the air filter device (20); and
- an electronic control unit (52) according to claim 16.

20. Cabin air filtration system (12) according to claim 19, comprising a reader (50) for the storage means (48), wherein the reader (50) is selected from the group comprising a reader installed in the air filter device (20) and a portable reader.

21. Use of a filter element (42, 44, 46) in a cabin air filtration system (12) of a vehicle (10) according to claim 19 or 20,
wherein the filter element (42, 44, 46) has the storage means (48), the storage means (48) is an RFID-tag, an NFC-tag, or a graphical code, and the storage means (48) comprises system information for the filter element (42, 44, 46), and
wherein the system information links
- at least one characteristic of the filter element (42, 44, 46) comprising information on a filtration efficiency of the filter element (42, 44, 46),
- the magnitude of the air flow (38) through the air filter device (20),
- the recirculation ratio of fresh and recirculated air,
- air property data referring to an air property inside and/or outside the cabin (14), and
- an air quality information which characterizes the air quality inside the cabin (14).

22. Use of a filter element (42, 44, 46) according to claim 21, **characterized in that** the at least one characteristic of the filter element (42, 44, 46) further comprises information on
- an efficiency curve of a filter medium of the filter element (42, 44, 46),
- a type of the filter medium,
- a pressure loss of the filter element (42, 44, 46) depending on the magnitude of the air flow (38) through the air filter device (20), and/or
- a pollutant accumulation capacity, in particular a dust capacity, of the filter element (42, 44, 46).

## Patentansprüche

1. Verfahren zum Betreiben eines Kabinenluftfilterungssystems (12) eines Fahrzeugs (10),
wobei das Kabinenluftfilterungssystem (12) eine Luftfiltervorrichtung (20) zum Filtern eines Luftstroms (38) in die Kabine (14) umfasst, wobei der Luftstrom (38) aus Frischluft von außen und Umluft aus einem Inneren der Kabine (14) zusammengesetzt ist;
wobei eine Größe des Luftstroms (38) durch die Luftfiltervorrichtung (20) einstellbar ist;
wobei ein Verhältnis von Frischluft und Umluft des Luftstroms (38) durch die Luftfiltervorrichtung (20) einstellbar ist;
**dadurch gekennzeichnet, dass** die Luftfiltervorrichtung (20) mindestens ein Filterelement (42, 44, 46) umfasst, das ein Speicherungsmittel (48) aufweist, wobei das Speicherungsmittel (48) ein RFID-Tag, ein NFC-Tag oder ein grafischer Code ist;
das Verfahren umfassend die Schritte
A) Abrufen (102) von Daten aus dem Speicherungsmittel (48) des Filterelements (42, 44, 48), umfassend Informationen, die das Filterelement (42, 44, 48) charakterisieren;
B) Bereitstellen von Systeminformationen für das mittels der in Schritt A) abgerufenen Informationen identifizierte Filterelement (42, 44, 48), wobei die Systeminformationen verknüpfen
- mindestens eine Charakteristik des Filterelements (42, 44, 48), umfassend Informationen über eine Filterungseffizienz des Filterelements (42, 44, 48),
- die Größe des Luftstroms (38) durch die Luftfiltervorrichtung (20),
- das Rezirkulationsverhältnis von Frisch- und Umluft,
- Lufteigenschaftsdaten, die sich auf eine Lufteigenschaft innerhalb und/oder außerhalb der Kabine (14) beziehen, und
- Luftqualitätsinformationen, welche die Luftqualität innerhalb der Kabine (14) charakterisieren;
C) Abrufen (112) aktueller Lufteigenschaftsdaten, die sich auf eine Lufteigenschaft innerhalb und/oder außerhalb der Kabine (14) beziehen;
D) Bestimmen (116), aus den Systeminformationen für die aktuelle Größe des Luftstroms, des aktuellen Rezirkulationsverhältnisses von Frisch- und Umluft und der aktuellen Lufteigenschaftsdaten, der Luftqualitätsinformationen, welche die Luftqualität innerhalb der Kabine (14) charakterisieren
wobei Schritt A) jedes Mal wiederholt wird, wenn das Fahrzeug (10) gestartet wird, und dass Schritt B) mindestens dann wiederholt wird, wenn sich die in dem wiederholten Schritt A) abgerufenen Informationen von den in der vorherigen Ausführung von Schritt A) abgerufenen Informationen unterscheidet.

2. Verfahren nach Anspruch 1, **dadurch gekennzeichnet, dass** in Schritt B) die Systeminformationen aus dem Speicherungsmittel abgerufen werden (110a).

3. Verfahren nach Anspruch 1, **dadurch gekennzeichnet, dass** in Schritt B) die Systeminformationen (110b) aus einer internen Speicherung einer elektronischen Steuereinheit des Kabinenluftfilterungssystems (12) oder aus einer externen Datenbank abgerufen werden.

4. Verfahren nach einem der vorstehenden Ansprüche,
**dadurch gekennzeichnet, dass** die Informationen über die Luftqualität innerhalb der Kabine (14), insbesondere das Ergebnis eines Vergleichs der Informationen über die Luftqualität innerhalb der Kabine (14) mit einem vordefinierten Zielwert, an eine Bedienerschnittstelle zum Melden an einen Benutzer (16, 18) des Fahrzeugs (10) ausgegeben werden.

5. Verfahren nach einem der vorstehenden Ansprüche,
**dadurch gekennzeichnet, dass** die Informationen über die Luftqualität innerhalb der Kabine (14) mit einem Zielwert verglichen werden (120), vorzugsweise unterschiedlichen Zielwerten für unterschiedliche Schadstoffe, insbesondere Partikel unterschiedlicher Größenbereiche und/oder schädliche Gase.

6. Verfahren nach Anspruch 5, ferner umfassend ein Einstellen des Rezirkulationsverhältnisses von Frisch- und Umluft basierend auf dem Ergebnis des Vergleichs.

7. Verfahren nach einem der vorstehenden Ansprüche,
**dadurch gekennzeichnet, dass** die Luftfiltervorrichtung (20) umfasst
- mindestens ein Basisfilterelement (42) zum Filtern der Frischluft und/oder der Umluft, und
- mindestens ein HEPA-Filterelement (44) und/oder ein Umgebungsluftfilterelement (46) zum Filtern der Frischluft.

8. Verfahren nach Anspruch 5 oder 6, **dadurch gekennzeichnet, dass** die Luftfiltervorrichtung (20) umfasst
- mindestens ein Basisfilterelement (42) zum Filtern der Frischluft und/oder der Umluft, und
- mindestens ein HEPA-Filterelement (44) und/oder ein Umgebungsluftfilterelement (46) zum Filtern der Frischluft,
- und ferner **dadurch gekennzeichnet, dass** der Frischluftstrom von außen abhängig von dem Ergebnis des Vergleichs das HEPA-Filterelement (44) und/oder das Umgebungsluftfilterelement (46) passiert oder umgeht.

9. Verfahren nach einem der vorstehenden Ansprüche,
**dadurch gekennzeichnet, dass** in Schritt C) die Lufteigenschaftsdaten von mindestens einem Lufteigenschaftssensor (56, 58) des Kabinenluftfilterungssystems (12) abgerufen werden.

10. Verfahren nach einem der vorstehenden Ansprüche,
**dadurch gekennzeichnet, dass** in Schritt C) die Lufteigenschaftsdaten von einem Umweltverschmutzungsmessdienst abgerufen werden.

11. Verfahren nach einem der vorstehenden Ansprüche,
**dadurch gekennzeichnet, dass** die mindestens eine Charakteristik des Filterelements (42, 44, 46) ferner Informationen umfasst über
- eine Wirkungsgradkurve eines Filtermediums des Filterelements (42, 44, 46),
- eine Art des Filtermediums,
- einen Druckverlust des Filterelements (42, 44, 46) abhängig von der Größe des Luftstroms (38) durch die Luftfiltervorrichtung (20), und/oder
- eine Schadstoffaufnahmekapazität, insbesondere eine Staubkapazität, des Filterelements (42, 44, 46).

12. Verfahren nach einem der vorstehenden Ansprüche,
**dadurch gekennzeichnet, dass** die Systeminformationen ein mehrdimensionales Datenarray mit den Luftqualitätsinformationen als einen Ausgabewert umfassen.

13. Verfahren nach einem der vorstehenden Ansprüche, ferner umfassend das Bestimmen einer Restlebensdauer des Filterelements (42, 44, 46).

14. Verfahren nach einem der vorstehenden Ansprüche,
**dadurch gekennzeichnet, dass** die in Schritt B) bereitgestellten Systeminformationen auch die Fahrzeuggeschwindigkeit mit den Luftqualitätsinformationen verknüpfen und **dass** die aktuelle Fahrzeuggeschwindigkeit in Schritt D) zum Bestimmen der Informationen über die Luftqualität innerhalb der Kabine (14) berücksichtigt wird.

15. Verfahren nach einem der vorstehenden Ansprüche,
**dadurch gekennzeichnet, dass** nach Schritt A) geprüft wird, dass das Filterelement (42, 44, 46) für das Kabinenluftfilterungssystem (12) geeignet ist, und insbesondere
- falls das Filterelement (42, 44, 46) geeignet ist, die Schritte B) bis D) durchgeführt werden und/oder
- falls das Filterelement (42, 44, 46) nicht geeignet ist, das Kabinenluftfilterungssystem (12) im Notfallmodus betrieben wird und/oder die Ungeeignetheit des Filterelements (42, 44, 46) einem Benutzer (16, 18) des Fahrzeugs (10) gemeldet wird.

16. Elektronische Steuereinheit (52) für ein Kabinenluftfilterungssystem (12) eines Fahrzeugs (10),
wobei das Kabinenluftfilterungssystem (12) eine Luftfiltervorrichtung (20) zum Filtern eines Luftstroms (38) in die Kabine (14) umfasst, wobei sich der Luftstrom (38) aus Frischluft von außen und Umluft aus dem Inneren der Kabine (14) zusammensetzt;
wobei eine aktuelle Größe des Luftstroms (38) durch die Luftfiltervorrichtung (20) einstellbar ist;
wobei ein aktuelles Rezirkulationsverhältnis von Frisch- und Umluft des Luftstroms (38) durch die Luftfiltervorrichtung (20) einstellbar ist; und
wobei die Luftfiltervorrichtung (20) mindestens ein Filterelement (42, 44, 46) umfasst, wobei das mindestens eine Filterelement (42, 44, 46) das Speicherungsmittel (48) aufweist, wobei das Speicherungsmittel (48) ein RFID-Tag, ein NFC-Tag oder ein grafischer Code ist;
wobei die elektronische Steuereinheit (52) konfiguriert ist, um das Verfahren nach einem der Ansprüche 1 bis 15 auszuführen.

17. Elektronische Steuereinheit (52) nach Anspruch 16, wobei die elektronische Steuereinheit (52) ferner konfiguriert ist, um die Systeminformationen aus dem Speicherungsmittel (48) oder aus einer externen Datenbank abzurufen.

18. Elektronische Steuereinheit (52) nach Anspruch 17, wobei die elektronische Steuereinheit (52) die Systeminformationen umfasst.

19. Kabinenluftfilterungssystem (12) umfassend
- eine Luftfiltervorrichtung (20) zum Filtern eines Luftstroms in eine Kabine (14) eines Fahrzeugs (10), wobei der Luftstrom aus Frischluft von außen und Umluft aus dem Inneren der Kabine (14) zusammengesetzt ist, wobei die Luftfiltervorrichtung (20) ein Filterelement (42, 44, 46) umfasst, welches das Speicherungsmittel (48) aufweist, wobei das Speicherungsmittel (48) ein RFID-Tag, ein NFC-Tag oder ein grafischer Code ist, und das Speicherungsmittel (48) Informationen umfasst, die das Filterelement (42, 44, 46) charakterisieren;
- eine Gebläsevorrichtung (40) zum Einstellen einer Größe des Luftstroms (38) durch die Luftfiltervorrichtung (20);
- eine Strömungsverhältniseinstellvorrichtung (32) zum Einstellen eines Verhältnisses von Frischluft und Umluft des Luftstroms (38) durch die Luftfiltervorrichtung (20); und
- eine elektronische Steuereinheit (52) nach Anspruch 16.

20. Kabinenluftfilterungssystem (12) nach Anspruch 19, umfassend ein Lesegerät (50) für das Speicherungsmittel (48), wobei das Lesegerät (50) ausgewählt ist aus der Gruppe, umfassend ein in der Luftfiltervorrichtung (20) installiertes Lesegerät und ein tragbares Lesegerät.

21. Verwendung eines Filterelements (42, 44, 46) in einem Kabinenluftfilterungssystem (12) eines Fahrzeugs (10) nach Anspruch 19 oder 20,
wobei das Filterelement (42, 44, 46) das Speicherungsmittel (48) aufweist, das Speicherungsmittel (48) ein RFID-Tag, ein NFC-Tag oder ein grafischer Code ist, und das Speicherungsmittel (48) Systeminformationen für das Filterelement (42, 44, 46) umfasst, und wobei die Systeminformationen verknüpfen
- mindestens eine Charakteristik des Filterelements (42, 44, 46), umfassend Informationen über eine Filterungseffizienz des Filterelements (42, 44, 46),
- die Größe des Luftstroms (38) durch die Luftfiltervorrichtung (20),
- das Rezirkulationsverhältnis von Frisch- und Umluft,
- Lufteigenschaftsdaten, die sich auf eine Lufteigenschaft innerhalb und/oder außerhalb der Kabine (14) beziehen, und
- Luftqualitätsinformationen, welche die Luftqualität innerhalb der Kabine (14) charakterisieren.

22. Verwendung eines Filterelements (42, 44, 46) nach Anspruch 21, **dadurch gekennzeichnet, dass** die mindestens eine Charakteristik des Filterelements (42, 44, 46) ferner Informationen umfasst über
- eine Wirkungsgradkurve eines Filtermediums des Filterelements (42, 44, 46),
- eine Art des Filtermediums,
- einen Druckverlust des Filterelements (42, 44, 46) abhängig von der Größe des Luftstroms (38) durch die Luftfiltervorrichtung (20), und/oder
- eine Schadstoffaufnahmekapazität, insbesondere eine Staubkapazität, des Filterelements (42, 44, 46).

## Revendications

1. Procédé de fonctionnement d'un système de filtration d'air d'habitacle (12) d'un véhicule (10),
dans lequel le système de filtration d'air d'habitacle (12) comprend un dispositif de filtre à air (20) pour filtrer un flux d'air (38) dans l'habitacle (14), dans lequel le flux d'air (38) est composé d'air frais provenant de l'extérieur et d'air recirculé provenant de l'intérieur de l'habitacle (14) ;
dans lequel une grandeur du flux d'air (38) à travers le dispositif de filtre à air (20) est réglable ;
dans lequel un rapport d'air frais et d'air recirculé du flux d'air (38) à travers le dispositif de filtre à air (20) est réglable ;
**caractérisé en ce que** le dispositif de filtre à air (20) comprend au moins un élément filtrant (42, 44, 46) ayant un moyen de stockage (48), le moyen de stockage (48) est une étiquette RFID, une étiquette NFC ou un code graphique ;
le procédé comprenant les étapes consistant à
A) récupérer (102) à partir du moyen de stockage (48) de l'élément filtrant (42, 44, 48) des données comprenant des informations caractérisant l'élément filtrant (42, 44, 48) ;
B) fournir des informations système pour l'élément filtrant (42, 44, 48) identifié par les informations récupérées à l'étape A), dans lequel les informations système relient
- au moins une caractéristique de l'élément filtrant (42, 44, 48) comprenant des informations sur une efficacité de filtration de l'élément filtrant (42, 44, 48),
- la grandeur du flux d'air (38) à travers le dispositif de filtre à air (20),
- le rapport de recirculation d'air frais et recirculé,
- des données de propriété de l'air relatives à une propriété de l'air à l'intérieur et/ou à l'extérieur de l'habitacle (14), et
- des information de qualité de l'air qui caractérisent la qualité de l'air à l'intérieur de l'habitacle (14) ;
C) récupérer (112) des données actuelles de propriété de l'air relatives à une propriété de l'air à l'intérieur et/ou à l'extérieur de l'habitacle (14) ;
D) déterminer (116), à partir des informations système pour la grandeur actuelle du flux d'air, le rapport de recirculation actuel d'air frais et recirculé et les données actuelles de propriété de l'air, les informations de qualité de l'air qui caractérisent la qualité de l'air à l'intérieur de l'habitacle (14)
dans lequel l'étape A) est répétée à chaque démarrage du véhicule (10) et l'étape B) est répétée au moins lorsque les informations récupérées lors de l'étape A) répétée diffère des informations récupérées lors de l'exécution précédente de l'étape A).

2. Procédé selon la revendication 1, **caractérisé en ce que** dans l'étape B) les informations système sont récupérées (110a) à partir du moyen de stockage.

3. Procédé selon la revendication 1, **caractérisé en ce que** à l'étape B) les informations système sont récupérées (110b) à partir d'une mémoire interne d'une unité de commande électronique du système de filtration d'air d'habitacle (12) ou à partir d'une base de données externe.

4. Procédé selon l'une quelconque des revendications précédentes, **caractérisé en ce que** les informations concernant la qualité de l'air à l'intérieur de l'habitacle (14), en particulier le résultat d'une comparaison des informations concernant la qualité de l'air à l'intérieur de l'habitacle (14) avec une valeur cible prédéfinie, sont délivrées en sortie à une interface utilisateur pour notification à un utilisateur (16, 18) du véhicule (10).

5. Procédé selon l'une quelconque des revendications précédentes, **caractérisé en ce que** les informations concernant la qualité de l'air à l'intérieur de l'habitacle (14) sont comparées (120) à une valeur cible, de préférence différentes valeurs cibles pour différents polluants, en particulier des matières particulaires de différentes plages de tailles et/ou des gaz nocifs.

6. Procédé selon la revendication 5, comprenant en outre le réglage du rapport de recirculation d'air frais et recirculé sur la base du résultat de la comparaison.

7. Procédé selon l'une quelconque des revendications précédentes, **caractérisé en ce que** le dispositif de filtre à air (20) comprend
- au moins un élément filtrant de base (42) pour filtrer l'air frais et/ou l'air recirculé, et
- au moins un élément de filtre HEPA (44) et/ou un élément de filtre à air ambiant (46) pour filtrer l'air frais.

8. Procédé selon la revendication 5 ou 6, **caractérisé en ce que** le dispositif de filtre à air (20) comprend
- au moins un élément filtrant de base (42) pour filtrer l'air frais et/ou l'air recirculé, et
- au moins un élément de filtre HEPA (44) et/ou un élément de filtre à air ambiant (46) pour filtrer l'air frais,
- et en outre **caractérisé en ce que** le flux d'air frais provenant de l'extérieur traverse ou contourne l'élément de filtre HEPA (44) et/ou l'élément de filtre à air ambiant (46) en fonction du résultat de la comparaison.

9. Procédé selon l'une quelconque des revendications précédentes, **caractérisé en ce que** dans l'étape C) les données de propriété de l'air sont récupérées à partir d'au moins un capteur de propriété de l'air (56, 58) du système de filtration d'air d'habitacle (12).

10. Procédé selon l'une quelconque des revendications précédentes, **caractérisé en ce que** dans l'étape C) les données de propriété de l'air sont récupérées à partir d'un service de mesure de pollution environnementale.

11. Procédé selon l'une quelconque des revendications précédentes, **caractérisé en ce que** l'au moins une caractéristique de l'élément filtrant (42, 44, 46) comprend en outre des informations sur
- une courbe d'efficacité d'un support de filtre de l'élément filtrant (42, 44, 46),
- un type du support de filtre,
- une perte de pression de l'élément filtrant (42, 44, 46) en fonction de la grandeur du flux d'air (38) à travers le dispositif de filtre à air (20), et/ou
- une capacité d'accumulation de polluants, en particulier une capacité de rétention de poussière, de l'élément filtrant (42, 44, 46).

12. Procédé selon l'une quelconque des revendications précédentes, **caractérisé en ce que** les informations système comprennent un tableau de données multidimensionnel avec les informations de qualité de l'air en tant que valeur de sortie.

13. Procédé selon l'une quelconque des revendications précédentes, comprenant en outre la détermination d'une durée de vie restante de l'élément filtrant (42, 44, 46).

14. Procédé selon l'une quelconque des revendications précédentes, **caractérisé en ce que** les informations système fournies à l'étape B) lient également la vitesse de véhicule aux informations de qualité de l'air et **en ce que** la vitesse de véhicule actuelle est prise en compte à l'étape D) pour déterminer les informations concernant la qualité de l'air à l'intérieur de l'habitacle (14).

15. Procédé selon l'une quelconque des revendications précédentes, **caractérisé en ce qu'**après l'étape A), il est vérifié que l'élément filtrant (42, 44, 46) est adéquat au système de filtration d'air d'habitacle (12), et en particulier
- si l'élément filtrant (42, 44, 46) est adéquat, les étapes B) à D) sont effectuées et/ou
- si l'élément filtrant (42, 44, 46) n'est pas adéquat, le système de filtration d'air d'habitacle (12) fonctionne en mode d'urgence et/ou l'inadéquation de l'élément filtrant (42, 44, 46) est notifiée à un utilisateur (16, 18) du véhicule (10).

16. Unité de commande électronique (52) pour un système de filtration d'air d'habitacle (12) d'un véhicule (10), dans laquelle le système de filtration d'air d'habitacle (12) comprend un dispositif de filtre à air (20) pour filtrer un flux d'air (38) dans l'habitacle (14), dans lequel le flux d'air (38) est composé d'air frais provenant de l'extérieur et d'air recirculé provenant de l'intérieur de l'habitacle (14) ;
dans laquelle une grandeur actuelle du flux d'air (38) à travers le dispositif de filtre à air (20) est réglable ;
dans laquelle un rapport de recirculation actuel d'air frais et recirculé du flux d'air (38) à travers le dispositif de filtre à air (20) est réglable ; et
dans laquelle le dispositif de filtre à air (20) comprend au moins un élément filtrant (42, 44, 46), l'au moins un élément filtrant (42, 44, 46) ayant le moyen de stockage (48), le moyen de stockage (48) est une étiquette RFID, une étiquette NFC ou un code graphique ;
dans laquelle l'unité de commande électronique (52) est configurée pour exécuter le procédé selon l'une quelconque des revendications 1 à 15.

17. Unité de commande électronique (52) selon la revendication 16, dans laquelle l'unité de commande électronique (52) est en outre configurée pour récupérer les informations système à partir du moyen de stockage (48) ou à partir d'une base de données externe.

18. Unité de commande électronique (52) selon la revendication 17, dans laquelle l'unité de commande électronique (52) comprend les informations système.

19. Système de filtration d'air d'habitacle (12) comprenant
- un dispositif de filtre à air (20) pour filtrer un flux d'air dans un habitacle (14) d'un véhicule (10), dans lequel le flux d'air est composé d'air frais provenant de l'extérieur et d'air recirculé provenant de l'intérieur de l'habitacle (14), dans lequel le dispositif de filtre à air (20) comprend un élément filtrant (42, 44, 46) ayant le moyen de stockage (48), le moyen de stockage (48) est une étiquette RFID, une étiquette NFC ou un code graphique, et le moyen de stockage (48) comprend des informations caractérisant l'élément filtrant (42, 44, 46) ;
- un dispositif de soufflante (40) pour régler une grandeur du flux d'air (38) à travers le dispositif de filtre à air (20) ;
- un dispositif de réglage de rapport de flux (32) pour régler un rapport d'air frais et d'air recirculé du flux d'air (38) à travers le dispositif de filtre à air (20) ; et
- une unité de commande électronique (52) selon la revendication 16.

20. Système de filtration d'air d'habitacle (12) selon la revendication 19, comprenant un lecteur (50) pour le moyen de stockage (48), dans lequel le lecteur (50) est choisi à partir du groupe comprenant un lecteur installé dans le dispositif de filtre à air (20) et un lecteur portable.

21. Utilisation d'un élément filtrant (42, 44, 46) dans un système de filtration d'air d'habitacle (12) d'un véhicule (10) selon la revendication 19 ou 20,
dans lequel l'élément filtrant (42, 44, 46) a le moyen de stockage (48), le moyen de stockage (48) est une étiquette RFID, une étiquette NFC ou un code graphique, et le moyen de stockage (48) comprend des informations système pour l'élément filtrant (42, 44, 46), et dans lequel les informations système relient
- au moins une caractéristique de l'élément filtrant (42, 44, 46) comprenant des informations sur une efficacité de filtration de l'élément filtrant (42, 44, 46),
- la grandeur du flux d'air (38) à travers le dispositif de filtre à air (20),
- le rapport de recirculation d'air frais et recirculé,
- des données de propriété de l'air relatives à une propriété de l'air à l'intérieur et/ou à l'extérieur de l'habitacle (14), et
- des informations de qualité de l'air qui caractérisent la qualité de l'air à l'intérieur de l'habitacle (14).

22. Utilisation d'un élément filtrant (42, 44, 46) selon la revendication 21, **caractérisée en ce que** l'au moins une caractéristique de l'élément filtrant (42, 44, 46) comprend en outre des informations sur
- une courbe d'efficacité d'un support de filtre de l'élément filtrant (42, 44, 46),
- un type du support de filtre,
- une perte de pression de l'élément filtrant (42, 44, 46) en fonction de la grandeur du flux d'air (38) à travers le dispositif de filtre à air (20), et/ou
- une capacité d'accumulation de polluants, en particulier une capacité de rétention de poussière, de l'élément filtrant (42, 44, 46).
